# EUROPEAN PATENT APPLICATION

(11) **EP 1 575 269 A2**
(43) Date of publication of application: **14.09.2005**
(21) Application number: 05101475.1
(22) Date of filing: 25.02.2005
(51) Int. Cl.: H04N 5/225

(54) **A camera apparatus**

(30) Priority: 10.03.2004 KR 2004016041
(71) Applicant: SAMSUNG ELECTRONICS CO., LTD., Gyeonggi-Do 442-742 (KR)
(72) Inventor: KIM, Nam-il, Jangan-gu, Suwon-si, Gyeonggi-do (KR); Lee, Chang-hee, Yeongtong-do,Yeongton-gu,Gyeonggi-do (KR)
(74) Representative: Geary, Stuart Lloyd

(57) **Abstract**

A multiple switch integrated device of a digital camcorder comprises a switch unit having a plurality of switch assemblies mounted on an outer casing of the camcorder to expose their buttons to the outside for controlling the central processing device to perform functions corresponding to operations of the buttons. A plurality of first electric connection parts electrically connects the plurality of switch assemblies to one another in series. A second electric connection part electrically connects with one of the plurality of switch assemblies and includes a connection terminal connected to a socket formed on the main substrate. The first and the second electric connection part can include a flexible printed cable. Since the multiple switch integrated device integrates a power on/off switch, a mode converting switch, a zoom switch, a shutter switch and/or a slow shutter switch with one another, the structure and assembly procedure can be simplified.

## Description

The present invention relates to a camera apparatus having a control means and a first and second spaced user control input means.

A digital camcorder comprises a central processing device for controlling operation of the camcorder and a plurality of switches which control the central processing device to perform certain functions. The plurality of switches comprise an on/off switch, a mode operating switch so that the camcorder operates in either a camera mode or a playback mode, and a zoom switch for controlling the zoom.

Each switch includes a switch assembly attached to the outer casing of the camcorder to allow a user to operate the switch, and a flexible printed cable (FPC) which connects the switch assembly to a socket of a main substrate in the central processing device.

As known camcorders has several FPCs to connect the respective switches to the corresponding sockets of the central processing device, the inner structure of the camcorder is complicated. Also, installation of the switches is inefficient because the switch assemblies are attached to the outer casing and then connected to corresponding sockets of the central processing device using FPCs. Therefore production decreases.

Recently, the development of a digital still camera-integrated camcorder which photographs an object, stores a signal representing the captured image in a memory card, and prints the image using a printer or reproduces it through a PC has increased.

For operation of the digital still camera, in addition to the on/off switch, the mode operating switch, and the zoom switch, the digital still camera-integrated camcorder has to have a shutter switch for capturing a still image and a slow shutter switch for performing a slow-sync mode which adjusts the time at which a flash or a strobe light (strobo) operates. This is adjusted according to the shutter speed.

Therefore, the digital still camera-integrated camcorder has a more complicated structure than the digital camcorder because of the FPCs required for the additional switches. Also, installing the switches is quite troublesome because the switch assemblies need to be connected to the outer casing as well as the FPCs being connected to the corresponding sockets of the central processing device. Accordingly, work efficiency during assembly of a digital still camera-integrated camcorder is significantly reduced and thus production significantly decreases.

The present invention has been developed in order to address the above problems in the related art. Accordingly, an object of the present invention is to provide a multiple switch integrated device of a digital camcorder which comprises therein a plurality of switches such as a power on/off switch, a mode converting switch, a zoom switch, a shutter switch and/or a slow shutter switch, thereby simplifying structure and assembly procedure.

The present invention relates to a camera apparatus having a control means and a first and second spaced user control input means.

A camera apparatus according to the present invention is characterised in that the first and second user control input means are connected to the control means by signal lines on a common printed wiring means.

Other additional or preferred features are set forth in claims 2 to 4 as appended hereto.

It should be noted that elements may be parts of a single structure or physically distinct elements.

An embodiment of the present invention will now be described, by way of example only, and with reference to the accompanying drawings, in which:
Figure 1 is a perspective view showing a digital camcorder employing a multiple switch integrated device according to an embodiment of the present invention;
Figure 2 is an exploded perspective view showing the multiple switch integrated device of the digital camcorder of Figure 1; and
Figure 3 is a front view showing the multiple switch integrated device of Figure 2 in an assembled state.

In the drawing figures, it will be understood that like reference numerals refer to like features and structures.

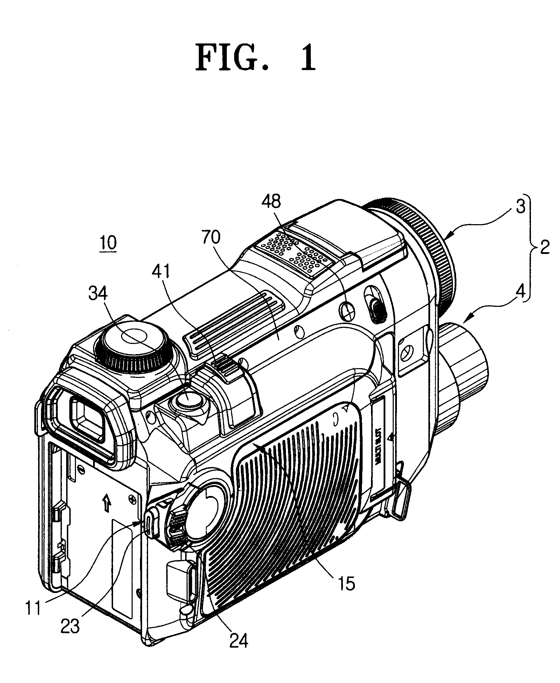

Referring to Figure 1, a digital camcorder 10 comprises a camera unit 2 having a video camera part 3 for capturing moving images and a digital still camera part 4 for capturing still pictures, which are disposed on upper and lower portions of the camera unit 2 in an integrated manner. The camcorder 10 also comprises a main substrate (not shown) located within an outer casing 15 which constitutes a central processing device for controlling operation of the camcorder. The camcorder 10 also has a multiple switch integrated device 11 for controlling the central processing device so as to perform functions corresponding to operations of operation buttons 23, 24, 34, 41, 48.

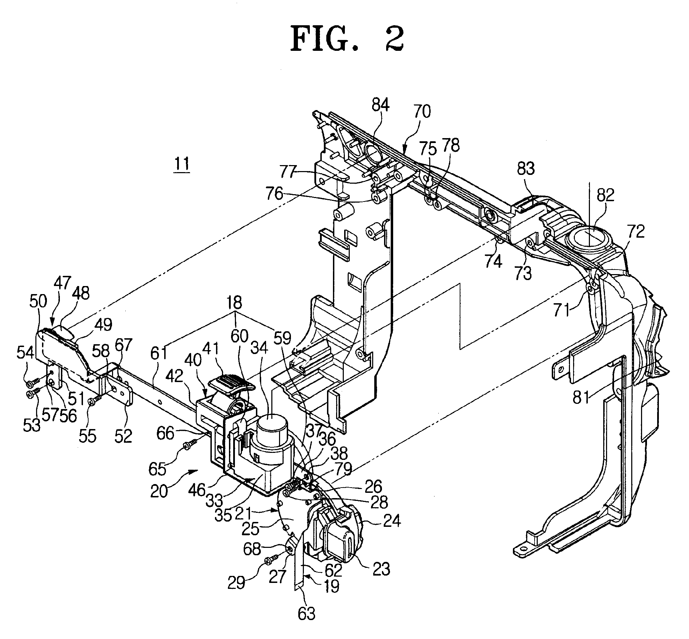

As shown in Figure 2, the multiple switch integrated device 11 comprises a switch unit 20 and a switch mounting frame 70 which forms part of the outer casing 15 of the camcorder 10. The switch unit 20 is mounted to the mounting frame 70.

The switch unit 20 comprises: first, second, third and fourth switch assemblies 21, 33, 40, 47 for controlling the central processing device so that functions corresponding to the operations of the operation buttons 23, 24, 34, 41, 48 are performed. The switch unit 20 also comprises a first electric connection part 18 for connecting the first, second, third and fourth switch assemblies 21, 33, 40, 47 to one another; and a second electric connection part 19, connected to the first switch assembly 21, having a connection terminal 63 connected to a socket (not shown) in the central processing device (on the main substrate thereof). The first to fourth switch assemblies 21, 33, 40, 47 are respectively mounted on the switch mounting frame 70 such that the operation buttons 23, 24, 34, 41, 48 are operable by a user.

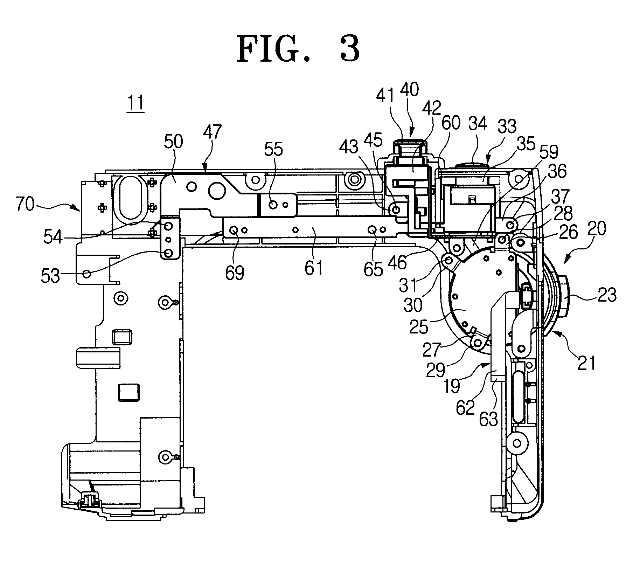

The first switch assembly 21 comprises an on/off button 23 for turning the apparatus on/off which is located on a side surface of the switch mounting frame 70, a mode operating lever 24 located adjacent to the on/off button 23 which selects the mode of operation of the apparatus from one of a video camera mode, a playback mode or a digital still camera mode. The first switch assembly 21 also comprises a first body 25 including a known switching circuit (not shown) for feeding a switch signal indicative of the operations of the power on/off button 23 and the mode converting lever 24 to the central processing device. The first switch assembly 21 is fixed to the switch mounting frame 70 by three first fixing brackets 26, 27, 30 formed on the first body 25 and first fixing screws 28, 29, 31 (see Figure 3), respectively. The first switch assembly 21 is fixed so that the on/off button 23 and the mode converting lever 24 are accessible to the outside through a first opening 81 formed in the switch mounting frame 70, for user operation.

The second switch assembly 33 comprises a shutter button 34 for capturing a still picture, and a second body 35 including a known switching circuit (not shown) for feeding a signal indicating that the shutter button 34 has been operated to the central processing device. The central processing device closes the shutter of the digital still camera part 4 to capture the image. The second switch assembly 33 is fixed to the switch mounting frame 70 by a second fixing bracket 36 formed on the second body 35 and a second fixing screw 37. The second switch assembly 33 is fixed so that the shutter button 34 protrudes through a first hole 82 formed in the switch mounting frame 70 for user operation.

The third switch assembly 40 comprises a zoom button 41 for adjusting the amount of zoom provided by the lens, and a third body 42. The third body 42 includes a known switching circuit (not shown) for feeding a signal indicating that the the zoom button 41 has been operated to the central processing device. Accordingly, the amount of zoom is adjusted. The third assembly 40 is fixed to the switch mounting frame 70 by a third fixing bracket 43 (see Figure 3) formed on the third body 42 and a third fixing screw 45. The fixing of the third assembly 40 is such that the zoom button 41 protrudes through a second opening 83 formed in the switch mounting frame 70 for user operation.

As the second switch assembly 33 and the third switch assembly 40 are located adjacent to each other, it is preferred that the second body 35 and the third body 42 are integrated with each other by fixing means such as a fixing plate 46 and a fixing screw (not shown).

The fourth assembly 47 comprises a slow shutter button 48 for performing a slow-sync mode which adjusts the time at which a flash or a strobo lights and is determined according to shutter speed. The fourth assembly 47 also comprises a fourth body 49 including a known switching circuit (not shown) for feeding a signal indicating that the slow shutter button 48 has been operated to the central processing device. Accordingly, the shutter speed of the digital still camera part 4 is adjusted. The fourth assembly 47 is fixed to the switch mounting frame 70 by two fourth fixing brackets 51, 52 formed on a support plate 50 which supports the fourth body 49 and three fourth fixing screws 53, 54, 55 so that the slow shutter button 48 protrudes through a second hole 84 formed in the switch mounting frame 70 allowing user operation.

The first electric connection part 18 comprises a first FPC 59 connecting the switching circuits of the first and the second bodies 25 and 35 of the first and the second switch assemblies 21 and 33 to each other, for example in series. The first electric connection part 18 also comprises a second FPC 60 connecting the switching circuits of the second and the third bodies 35 and 42 of the second and the third switch assemblies 33 and 40 to each other, for example, in series. The first electric connection part 18 also comprises a third FPC 61 connecting the switching circuits of the third and the fourth bodies 42 and 49 of the third and the fourth switch assemblies 40 and 47, for example, in series.

As the third FPC 61 is longer than the first and the second FPCs 59 and 60, the third FPC 61 is fixed to the switch mounting frame 70 by inserting first and second FPC fixing screws 65 and 69 (see Figure 3) in first and second FPC fixing holes 74 and 75 of the switch mounting frame 70 through first and second FPC penetrating holes 66 and 67 (see Figure 2). This ensures that the third FPC 61 does not interfere in the assembling of other parts.

In another embodiment, the third FPC 61 is physically more robust and thicker than the first and the second FPCs 59 and 60 or has a supplementary part (not shown) which facilitates the fixing of the third FPC 61 to the switch mounting frame 70 using the first and the second FPC fixing screws 65 and 69.

The second electric connection part 19 comprises a fourth FPC 62 connected to the switching circuit of the first body 25 and includes the connection terminal 63 coupled to the socket (not shown) formed on the main substrate.

As described above, in the multiple switch integrated device 11 according to the present invention, as only the fourth FPC 62 is includes the connection terminal 63 connected to the socket on the main substrate, the switch device 11 has a more simplified structure than known switches. Also, the number of assembly procedures for connecting the terminals of the FPCs to sockets in the main substrate is reduced.

Also, since the first, second, third and fourth switch assemblies 21, 33, 40, 47 are connected to one another by the first, second and third FPCs 59, 60, 61, the first, second, third and fourth switch assemblies 21, 33, 40, 47 are not picked up separately during assembly. This is because the first, second, third and fourth switch assemblies 21, 33, 40, 47 are mounted on the switch mounting frame 70 once and by a single pick-up operation. This results in improved assembly efficiency.

Also, since the multiple switch integrated device 11 is configured such that the switch mounting frame 70 for mounting the first, second, third and fourth switch assemblies 21, 33, 40, 47 forms the outer casing 15, the multiple switch integrated device 11 is prepared before assembly. Accordingly, the time to assembly the camcorder is reduced.

Although the multiple switch integrated device 11 is applied to the digital still camera-integrated camcorder including a power on/off switch, a mode operating switch, a zoom switch, a shutter switch, and a slow shutter switch in this embodiment, this should not be considered as limiting. The multiple switch integrated device 11 can be applied to a general digital camcorder, which does not integrate the digital still camera part 4 and includes only one or more of the power on/off switch, the mode converting switch, and the zoom switch.

Hereinafter, an assembly process of the multiple switch integrated device 11 as constructed above will be described with reference to Figures 2 and 3.

As shown in Figure 2, the switch unit 20 in which the first, second, third and fourth switch assemblies 21, 33, 40, 47 are connected to one another through the first, second and third FPCs 59, 60, 61.

Next, the on/off button 23 and the mode operating lever 24 of the first switch assembly 21, the shutter button 34 of the second switch assembly 33, the zoom button 41 of the third switch assembly 40 and the slow shutter button 48 of the fourth switch assembly 47 are inserted into the first opening 81, the first hole 82, the second opening 83 and the second hole 84. First penetrating holes 79 and 68 (only two of three first penetrating holes are illustrated in Figure 2) of the first fixing brackets 26, 27, 30, a second penetrating hole 38 of the second fixing bracket 36, a third penetrating hole (not shown) of the third fixing bracket 43, and a fourth penetrating holes 56, 57, 58 of the fourth fixing brackets 51 and 52 are aligned with a first fixing hole 71 (only one is illustrated), a second fixing hole 72, a third fixing hole 73 and fourth fixing holes 76, 77, 78 formed in the switch mounting frame 70.

Next, the first fixing screws 28, 29, 31, the second fixing screw 37, the third fixing screw 45, and the fourth fixing screws 53, 54, 55 are screwed into the first fixing hole 71, the second fixing hole 72, the third fixing hole 73, and the fourth fixing holes 76, 77, 78, respectively, through the first penetrating holes 79 and 68, the second penetrating hole 38, the third penetrating hole, and the fourth penetrating holes 56, 57, 58. The first and second FPC fixing screws 65 and 69 are screwed into the first and the second FPC fixing holes 74 and 75 through the first and the second FPC penetrating holes 66 and 67. Accordingly, the first, second, third and fourth switch assemblies 21, 33, 40, 47 and the third FPC 61 are fixed to the switch mounting frame 70.

In this state, after the connection terminal 63 of the fourth FPC 62 is connected to the socket formed on the main substrate, the switch mounting unit 60 is fixed to the outer casing 15, thereby completing the assembly of the multiple switch integrated device 11.

As described above, as the multiple switch integrated device 11 of the digital camcorder connects the on/off switch, the mode operating switch, the zoom switch, the shutter switch and/or the slow shutter switch to one another, the structure and assembly procedure is simplified.

It should be noted that although the foregoing is described using flexible printed circuits, other forms of connection may be appropriate, for example a rigid printed circuit.

## Claims

1. A camera apparatus (10) having a control means and a first and second spaced user control input means (20, 30, 40, 50, 60), **characterised in that** the first and second user control input means (20, 30, 40, 50, 60) are connected to the control means by signal lines on a common printed wiring means (18, 19).

2. A camera apparatus according to claim 1, wherein the common printed wiring means (18, 19) comprises first wiring means (18) connecting the first and second user control input means (20, 30, 40, 50, 60).

3. A camera apparatus according to claim 2, wherein the common printed wiring means comprises second wiring means (19) connecting the first user control input means to the control means (20, 30, 40, 50, 60).

4. A camera apparatus according to any one of claims 1, 2 or 3, wherein the common printed wiring means is a flexible printed cable.

5. A multiple switch integrated device of a digital camcorder which comprises a main substrate constituting a central processing device for controlling operation of the camcorder, the multiple switch integrated device comprising a switch unit, the switch unit comprising:
a plurality of switch assemblies mounted on an outer casing of the camcorder to expose their buttons to the outside for controlling the central processing device to perform functions corresponding to operations of the buttons;
a plurality of first electric connection parts for electrically connecting the plurality of switch assemblies to one another in series; and
a second electric connection part electrically connected with one of the plurality of switch assemblies and comprising a connection terminal connected to a socket formed on the main substrate.

6. The multiple switch integrated device as claimed in claim 5, wherein the plurality of switch assemblies comprises at least one of a power on/off and mode converting switch assembly for turning on/off power source and converting between a selected one of a camera mode and a VCR mode, a zoom switch assembly for adjusting a photographing magnification of an object, a shutter switch assembly for photographing a still image, and a slow shutter switch assembly for performing a slow-Sync mode to adjust a timing point when a flash or a strobo fires according to a shutter speed.

7. The multiple switch integrated device as claimed in claim 6, wherein the zoom switch assembly and the shutter switch assembly are integrated with each other.

8. The multiple switch integrated device as claimed in claim 5, wherein at least one of the first electric connection parts and the second electric connection parts comprises a flexible printed cable.

9. The multiple switch integrated device as claimed in claim 5, further comprising a switch mounting frame constituting a part of the outer casing for affixing the plurality of switch assemblies thereto.

10. A method of operating a multiple switch integrated device of a digital camcorder which comprises a main substrate constituting a central processing device for controlling operation of the camcorder, the method comprising the steps of:
mounting a plurality of switch assemblies on an outer casing of the camcorder to expose their buttons to the outside for controlling the central processing device to perform functions corresponding to operations of the buttons;
electrically connecting the plurality of switch assemblies to one another in series via a plurality of first electric connection parts; and
electrically connecting with one of the plurality of switch assemblies via a second electric connection part.

11. The method as claimed in claim 10, wherein the second electric connection part comprises a connection terminal connected to a socket formed on the main substrate.

12. The method as claimed in claim 10, wherein the plurality of switch assemblies comprises at least one of a power on/off and mode converting switch assembly for turning on/off power source and converting between a selected one of a camera mode and a VCR mode, a zoom switch assembly for adjusting a photographing magnification of an object, a shutter switch assembly for photographing a still image, and a slow shutter switch assembly for performing a slow-Sync mode to adjust a timing point when a flash or a strobo fires according to a shutter speed.

13. The method as claimed in claim 11, wherein the zoom switch assembly and the shutter switch assembly are integrated with each other.

14. The multiple switch integrated device as claimed in claim 10, wherein at least one of the first electric connection parts and the second electric connection parts comprises a flexible printed cable.

15. The method as claimed in claim 10, wherein a switch mounting frame constitutes a part of the outer casing and further comprising the step of affixing the plurality of switch assemblies to the outer casing via the switch mounting frame.
